(19) Europäisches Patentamt
European Patent Office
Office européen des brevets

(11) Veröffentlichungsnummer: **0 201 032**
**A2**

(12) **EUROPÄISCHE PATENTANMELDUNG**

(21) Anmeldenummer: **86105903.8**

(22) Anmeldetag: **29.04.86**

(51) Int. Cl.[4]: **C 07 C 145/04**, A 01 N 47/24

(30) Priorität: **08.05.85 DE 3516426**

(43) Veröffentlichungstag der Anmeldung: **12.11.86 Patentblatt 86/46**

(84) Benannte Vertragsstaaten: **AT BE CH DE FR GB IT LI NL SE**

(71) Anmelder: **BAYER AG, Konzernverwaltung RP Patentabteilung, D-5090 Leverkusen 1 Bayerwerk (DE)**

(72) Erfinder: **Maurer, Fritz, Dr., Roeberstrasse 8, D-5600 Wuppertal 1 (DE)**
Erfinder: **Reinecke, Paul, Dr., Steinstrasse 8, D-5090 Leverkusen 3 (DE)**
Erfinder: **Homeyer, Bernhard, Dr., Obere Strasse 28, D-5090 Leverkusen 3 (DE)**

(54) **N-Halogenalkylsulfenyl-(thio)-carbamate.**

(57) N-Halogenalkylsulfenyl-(thio)-carbamate der allgemeinen Formel (I)

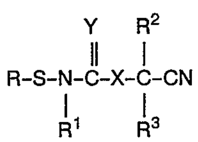
(I)

in welcher R für Halogenalkyl steht, $R^1$ für Alkyl oder für gegebenenfalls substituiertes Aryl steht, $R^2$ für Wasserstoff, Alkyl oder für gegebenenfalls substituiertes Aryl steht, $R^3$ für Wasserstoff oder Alkyl steht und X und Y unabhängig voneinander jeweils für Sauerstoff oder Schwefel stehen sowie ihre Verwendung als Fungizide, Akarizide und Insektizide.

Die neuen N-Halogenalkylsulfenyl-(thio)-carbamate können hergestellt werden, wenn man geeignete N-Halogenalkylsulfenyl-(thio)-carbamoylhalogenide mit geeigneten Cyanocarbinolen bzw. -thiolen oder mit geeigneten Ketonen bzw. Aldehyden umsetzt oder wenn man geeignete Cyanalkyl-(thio)-carbamate mit geeigneten Sulfenylhalogeniden umsetzt.

EP 0 201 032 A2

0201032

BAYER AKTIENGESELLSCHAFT
5090 Leverkusen, Bayerwerk
Konzernverwaltung RP
Patentabteilung
Bas/li-c
I b

N-Halogenalkylsulfenyl-(thio)-carbamate

Die Erfindung betrifft neue N-Halogenalkylsulfenyl-(thio)-carbamate, mehrere Verfahren zu ihrer Herstellung und ihre Verwendung als Schädlingsbekämpfungsmittel, insbesondere als Fungizide, Akarizide und Insektizide.

Es ist bereits bekannt, daß bestimmte Thiocarbamate, wie beispielsweise das Zink-ethylen-1,2-bis-(dithiocarbamat), fungizide Eigenschaften besitzen (vergl. z. B. K.H.Büchel "Pflanzenschutz und Schädlingsbekämpfung" G. Thieme Verlag Stuttgart 1977, S. 137).

Die Wirksamkeit dieser vorbekannten Verbindungen ist jedoch insbesondere bei niedrigen Aufwandmengen und Konzentrationen nicht immer in allen Anwendungsbereichen völlig zufriedenstellend.

Außerdem ist bekannt, daß bestimmte Phosphorverbindungen, wie beispielsweise der O,O-Dimethyl-O-(4-brom-2,5-dichlorphenyl)-thionophosphorsäureester, insbesondere zur Bekämpfung von Bodeninsekten eine breite Anwendung finden (vergleiche z. B. R. Wegler "Chemie der Pflanzenschutz- und

Schädlingsbekämpfungsmittel" 1. Band, Springer Verlag, Berlin, Heidelberg, New York 1970 S. 473).

Auch deren Wirksamkeit ist jedoch insbesondere bei niedrigen Aufwandmengen und Konzentrationen nicht immer in allen Anwendungsgebieten völlig zufriedenstellend.

Es wurden neue N-Halogenalkylsulfenyl-(thio)-carbamate der allgemeinen Formel (I),

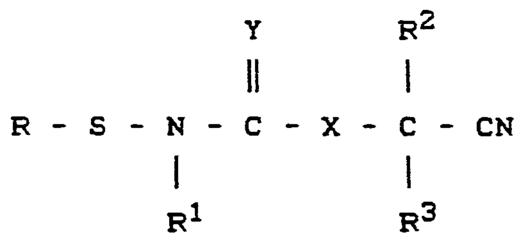

(I)

in welcher

R für Halogenalkyl steht,

$R^1$ für Alkyl oder für gegebenenfalls substituiertes Aryl steht,

$R^2$ für Wasserstoff, Alkyl oder für gegebenenfalls substituiertes Aryl steht,

$R^3$ für Wasserstoff oder Alkyl steht und

X und Y unabhängig voneinander jeweils für Sauerstoff oder Schwefel stehen,

gefunden.

Weiterhin wurde gefunden, daß man die neuen N-Halogenalkylsulfenyl-(thio)-carbamate der allgemeinen Formel (I),

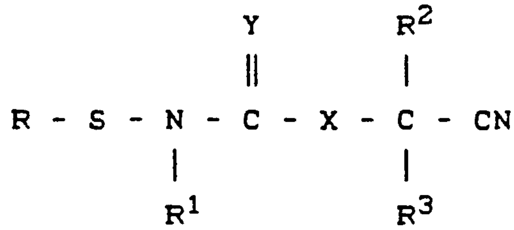

(I)

in welcher

R für Halogenalkyl steht,

$R^1$ für Alkyl oder für gegebenenfalls substituiertes Aryl steht,

$R^2$ für Wasserstoff, Alkyl oder für gegebenenfalls substituiertes Aryl steht,

$R^3$ für Wasserstoff oder Alkyl steht und

X und Y unabhängig voneinander jeweils für Sauerstoff oder Schwefel stehen,

erhält, indem man

(a) N-Halogenalkylsulfenyl-(thio)-carbamoylhalogenide der Formel (II)

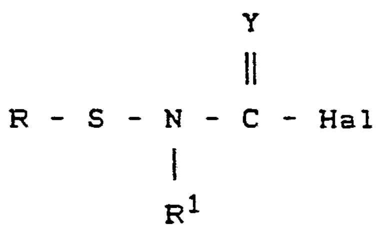

(II)

in welcher

R, $R^1$ und Y die oben angegebene Bedeutung haben und

Hal für Halogen steht,

entweder

(α) mit Cyanocarbinolen oder -thiolen der Formel (III)

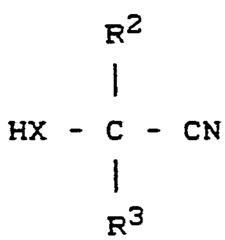

(III)

in welcher

$R^2$, $R^3$ und X die oben angegebene Bedeutung haben,

gegebenenfalls in Gegenwart eines Verdünnungsmittels und gegebenenfalls in Gegenwart eines Säurebindemittels umsetzt oder

(β) mit Ketonen oder Aldehyden der Formel (IV),

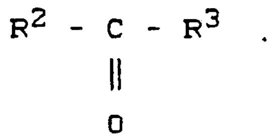 (IV)

in welcher
$R^2$ und $R^3$ die oben angegebene Bedeutung haben,
in Gegenwart eines Alkalimetallcyanids und gegebenenfalls in Gegenwart eines Verdünnungsmittels, sowie gegebenenfalls in Gegenwart eines Katalysators umsetzt, oder indem man

(b) Cyanalkyl-(thio)-carbamate der Formel (V)

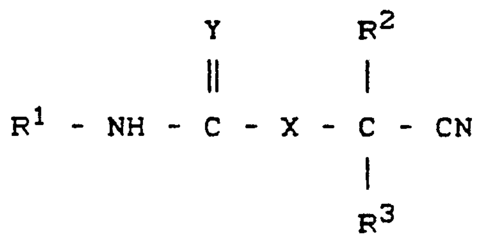 (V)

in welcher
$R^1$, $R^2$, $R^3$, X und Y die oben angegebene Bedeutung haben,

mit Sulfenylhalogeniden der Formel (VI)

R - S - Hal' (VI)

in welcher
R die oben angegebene Bedeutung hat und
Hal' für Halogen steht,

gegebenenfalls in Gegenwart eines Verdünnungsmittels und gegebenenfalls in Gegenwart eines Säurebindemittels umsetzt.

Halogenalkyl bedeutet in der Definition von R Halogenalkyl, vorzugsweise mit 1 bis 4 Kohlenstoffatomen und 1 bis 9 Halogenatomen, insbesondere mit 1 oder 2 Kohlenstoffatomen und 1 bis 5 Halogenatomen.

Halogen bedeutet im Halogenalkyl Fluor, Chlor, Brom und Jod, vorzugsweise Fluor, Chlor und Brom, insbesondere Fluor und Chlor. Beispielhaft seien Trichlormethyl, Trifluormethyl, Tribrommethyl, Difluorchlormethyl, Fluordichlormethyl, Dichlormethyl, Chlormethyl, Chlorethyl, Bromethyl, Trichlorethyl, Trifluorethyl, Pentachlorethyl, Pentafluorethyl, Chlorpropyl, Fluorpropyl insbesondere Dichlorfluormethyl genannt.

Die Alkylreste in $R^1$, $R^2$ und $R^3$ können gleich oder verschieden sein und bedeuten geradkettiges oder verzweigtes Alkyl mit 1 bis 8, vorzugsweise 1 bis 4 Kohlenstoffatomen. Beispielhaft seien Methyl, Ethyl, n-Propyl, iso-Propyl, n-Butyl, iso-Butyl, sec.-Butyl und tert.-Butyl genannt.

Aryl bedeutet in $R^1$ und $R^2$ Phenyl und Naphthyl.

Als Substituenten der Arylreste in $R^1$ und $R^2$ kommen beispielsweise in Frage: Halogen, wie Fluor, Chlor, Brom und Jod, vorzugsweise Fluor oder Chlor, insbesondere Chlor, Cyano, Nitro, Alkyl mit 1 bis 4 Kohlenstoffatomen, wie Methyl, Ethyl, n-Propyl, iso-Propyl, n-Butyl, iso-Butyl, sec.-Butyl und tert.-Butyl, vorzugsweise Methyl, Alkoxy mit 1 bis 4 Kohlenstoffatomen, wie Methoxy, Ethoxy, n-Propoxy, iso-Propoxy, n-Butoxy, iso-Butoxy, sec.-Butoxy und tert.- Butoxy, insbesondere Methoxy, und Halogenalkyl mit 1 bis 4 Kohlenstoffatomen und 1 bis 9 Halogenatomen, wie Fluor, Chlor, Brom und Jod, vorzugsweise Fluor, Brom und Chlor, wie Chlormethyl, Chlorethyl, Dichlormethyl, Trichlormethyl, Trifluormethyl, Difluorchlormethyl, Dichlorfluorethyl, Trifluorethyl, Trichlorethyl und Pentafluorethyl, insbesondere Trifluormethyl.

Schließlich wurde gefunden, daß die neuen N-Halogenalkylsulfenyl-(thio)-carbamate der allgemeinen Formel (I) fungizide, akarizide und insektizide Eigenschaften besitzen.

Überraschenderweise zeigen die erfindungsgemäßen N-Halogenalkylsulfenyl-(thio)-carbamate der allgemeinen Formel (I) eine erheblich bessere fungizide, akarizide und insektizide Wirksamkeit als die aus dem Stand der Technik bekannten Verbindungen, wie beispielsweise das Zink-ethylen-1,2-bis-(dithiocarbamat) oder der O,O-Dimethyl-O-(4-brom-2,5-dichlorphenyl)-thionophosphorsäureester, welche wirkungsmäßig naheliegende Verbindungen sind.

Die erfindungsgemäßen N-Halogenalkylsulfenyl-(thio)-carbamate sind durch die Formel (I) allgemein definiert. Bevorzugt sind Verbindungen der Formel (I), in welcher

R für geradkettiges oder verzweigtes Halogenalkyl mit 1 bis 4 Kohlenstoffatomen und 1 bis 9 gleichen oder verschiedenen Halogenatomen steht,

$R^1$ für geradkettiges oder verzweigtes Alkyl mit 1 bis 8 Kohlenstoffatomen oder für gegebenenfalls einfach bis siebenfach, gleich oder verschieden substituiertes Phenyl oder Naphthyl steht, wobei als Substituenten infrage kommen:
Halogen, Cyano, Nitro sowie jeweils geradkettiges oder verzweigtes Alkyl oder Alkoxy mit jeweils 1 bis 4 Kohlenstoffatomen oder geradkettiges oder verzweigtes Halogenalkyl mit 1 bis 4 Kohlenstoffatomen und 1 bis 9 gleichen oder verschiedenen Halogenatomen;

$R^2$ für Wasserstoff, geradkettiges oder verzweigtes Alkyl mit 1 bis 8 Kohlenstoffatomen oder für gegebenenfalls ein- bis siebenfach, gleich oder verschieden substituiertes Phenyl oder Naphthyl steht, wobei als Substituenten infrage kommen:

Halogen, Cyano, Nitro sowie jeweils geradkettiges oder verzweigtes Alkyl oder Alkoxy mit jeweils 1 bis 4 Kohlenstoffatomen oder geradkettiges oder verzweigtes Halogenalkyl mit 1 bis 4 Kohlenstoffatomen und 1 bis 9 gleichen oder verschiedenen Halogenatomen;

$R^3$ für Wasserstoff oder für geradkettiges oder verzweigtes Alkyl mit 1 bis 8 Kohlenstoffatomen steht und

X und Y unabhängig voneinander jeweils für Sauerstoff oder Schwefel stehen.

Besonders bevorzugt sind Verbindungen der Formel (I), in welcher

R für Trifluormethyl, Difluorchlormethyl, Fluordichlormethyl, Trichlormethyl, Dichlormethyl, Chlormethyl, Chlorethyl, Bromethyl, Trichlorethyl, Trifluorethyl oder Pentafluorethyl steht,

$R^1$ für Methyl, Ethyl, n- oder i-Propyl, n-, i-, s- oder t-Butyl oder für gegebenenfalls ein- bis dreifach, gleich oder verschieden substituiertes Phenyl steht, wobei als Substituenten infrage kommen: Chlor, Methyl, Methoxy oder Trifluormethyl;

$R^2$ für Wasserstoff, Methyl, Ethyl, n- oder i-Propyl, n-, i-, s- oder t-Butyl oder für gegebenenfalls ein- bis dreifach, gleich oder verschieden substituiertes Phenyl steht, wobei als Substituenten infrage kommen: Chlor, Methyl, Methoxy oder Trifluormethyl;

$R^3$ für Wasserstoff, Methyl, Ethyl, n- oder i-Propyl sowie n-, i-, s- oder t-Butyl steht und

X und Y unabhängig voneinander jeweils für Sauerstoff oder Schwefel stehen.

Insbesondere seien Verbindungen der Formel (I) genannt, in welcher

R für Dichlorfluormethyl steht,

$R^1$ für Methyl, Ethyl, n-Propyl, i-Propyl, n-, i-, s- oder t.-Butyl steht,

$R^2$ für Wasserstoff, Phenyl, Methyl, Ethyl, n-Propyl, i-Propyl, n-, i-, s-, oder t.-Butyl steht,

$R^3$ für Wasserstoff oder Methyl steht und

X und Y unabhängig voneinander für Sauerstoff oder Schwefel stehen.

Im einzelnen sei auf die bei den Herstellungsbeispielen genannten Verbindungen verwiesen.

Verwendet man beispielsweise N-Methyl-N-dichlorfluormethylsulfenyl-carbamidsäurefluorid und Glykolsäurenitril als Ausgangsstoffe, so läßt sich der Reaktionsablauf des erfindungsgemäßen Verfahrens (a - α) durch das folgende Formelschema darstellen:

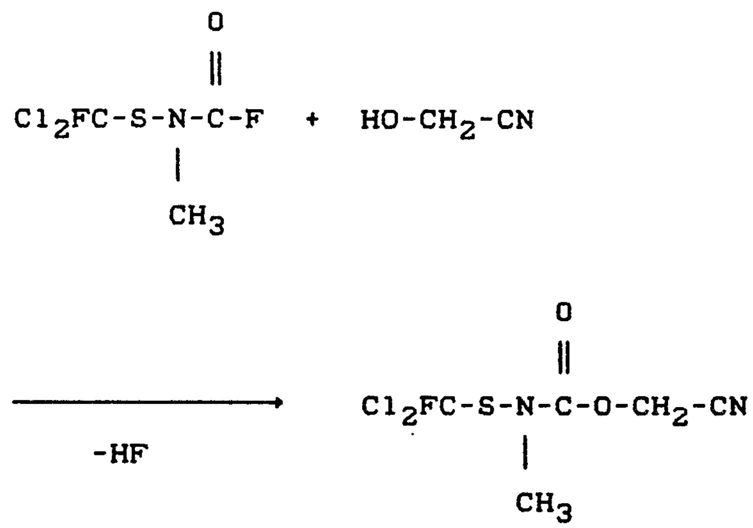


Verwendet man beispielsweise N-Ethyl-N-dichlorfluormethylsulfenyl-carbamidsäurefluorid, Isobutyraldehyd und Kaliumcyanid als Ausgangsstoffe, so läßt sich der Reaktionsablauf des erfindungsgemäßen Verfahrens (a - β) durch das folgende Formelschema darstellen:

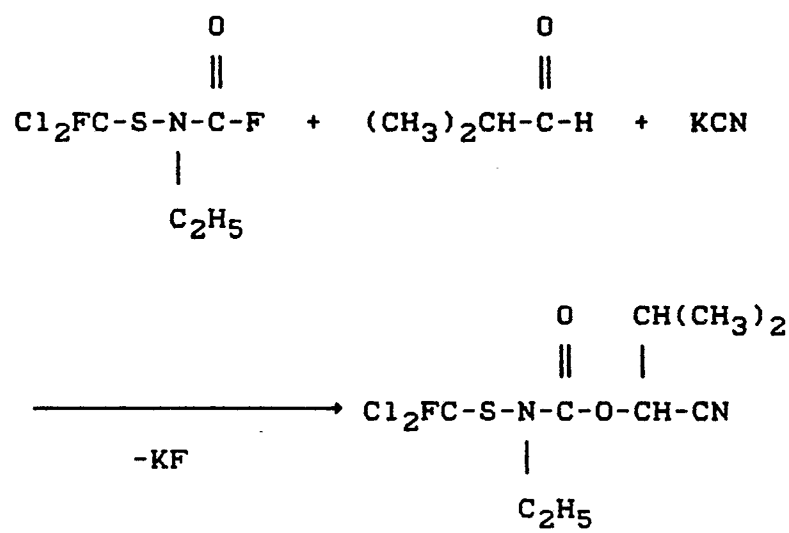


Verwendet man beispielsweise N-Methyl-O-cyanmethylcarbamat und Trichlormethansulfenylchlorid als Ausgangsstoffe, so

läßt sich der Reaktionsablauf des erfindungsgemäßen Verfahrens (b) durch das folgende Formelschema darstellen:

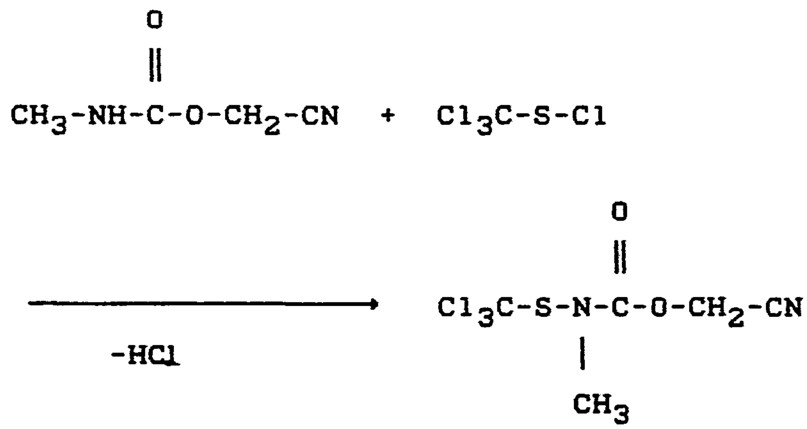


Die zur Durchführung des erfindungsgemäßen Verfahrens (a) als Ausgangsstoffe benötigten N-Halogenalkylsulfenyl-(thio)-carbamoylhalogenide sind durch die Formel (II) allgemein definiert. In dieser Formel (II) stehen R, $R^1$ und Y vorzugsweise für diejenigen Reste, die bereits im Zusammenhang mit der Beschreibung der erfindungsgemäßen Stoffe der Formel (I) für diese Substituenten genannt werden.

Hal steht für Halogen, vorzugsweise für Fluor oder Chlor.

Die N-Halogenalkylsulfenyl-(thio)-carbamoylhalogenide der Formel (II) sind bekannt (vergl. z. B. Belg. Pat. 717 705).

Die zur Durchführung des erfindungsgemäßen Verfahrens (a-α) weiterhin als Ausgangsstoffe benötigten Cyanocarbinole oder -thiole sind durch die Formel (III) allgemein

definiert. In dieser Formel (III) stehen $R^2$, $R^3$ und X vorzugsweise für diejenigen Reste, die bereits im Zusammenhang mit der Beschreibung der erfindungsgemäßen Stoffe der Formel (I) für diese Substituenten genannt werden.

Die Cyanocarbinole oder -thiole der Formel (III) sind allgemein bekannte Verbindungen der organischen Chemie.

Die zur Durchführung des erfindungsgemäßen Verfahrens (a - β) weiterhin als Ausgangsstoffe benötigten Aldehyde und Ketone sind durch die Formel (IV) allgemein definiert. In dieser Formel (IV) stehen $R^2$ und $R^3$ vorzugsweise für diejenigen Reste, die bereits im Zusammenhang mit der Beschreibung der erfindungsgemäßen Stoffe der Formel (I) für diese Substituenten genannt werden.

Die Aldehyde und Ketone der Formel (IV) sind ebenfalls allgemein bekannte Verbindungen der organischen Chemie.

Die zur Durchführung des erfindungsgemäßen Verfahrens (b) als Ausgangsstoffe benötigten Cyanalkyl-(thio)-carbamate sind durch die Formel (V) allgemein definiert. In dieser Formel (V) stehen $R^1$, $R^2$, $R^3$, X und Y vorzugsweise für diejenigen Reste, die bereits im Zusammenhang mit der Beschreibung der erfindungsgemäßen Stoffe der Formel (I) für diese Substituenten genannt werden.

Die Cyanalkyl-(thio)-carbamate der Formel (V) sind bekannt (vergl. z. B. FR 1 506 257; Arm. Khim. Zh. 23, 49-53 [1970] oder Agr. Biol. Chem. 35, 1707-1719 [1971]) oder lassen sich nach bekannten Verfahren in analoger Weise herstellen.

Die zur Durchführung des erfindungsgemäßen Verfahrens (b) weiterhin als Ausgangsstoffe benötigten Sulfenylhalogenide sind durch die Formel (VI) allgemein definiert. In dieser Formel (VI) steht R vorzugsweise für diejenigen Reste, die bereits im Zusammenhang mit der Beschreibung der erfindungsgemäßen Stoffe der Formel (I) für diesen Substituenten genannt werden.

$Hal^1$ steht für Halogen, vorzugsweise für Chlor oder Brom.

Die Sulfenylhalogenide der Formel (VI) sind ebenfalls allgemein bekannte Verbindungen der organischen Chemie.

Als Verdünnungsmittel zur Durchführung des erfindungsgemäßen Verfahrens (a - α) kommen inerte organische Lösungsmittel infrage.

Hierzu gehören insbesondere aliphatische oder aromatische, gegebenenfalls halogenierte Kohlenwasserstoffe, wie beispielsweise Benzin, Benzol, Toluol, Xylol, Chlorbenzol, Petrolether, Hexan, Cyclohexan, Dichlormethan, Chloroform, Tetrachlorkohlenstoff; Ether, wie Diethylether, Dioxan, Tetrahydrofuran oder Ethylenglykoldimethyl- oder -diethylether; Ketone, wie Aceton oder Butanon; Nitrile, wie Acetonitril oder Propionitril; Amide, wie Dimethylformamid, Dimethylacetamid, N-Methylformanilid, N-Methylpyrrolidon oder Hexamethylphosphorsäuretriamid; Ester, wie Essigsäureethylester oder Sulfoxide, wie Dimethylsulfoxid.

Das erfindungsgemäße Verfahren (a - α) kann gegebenenfalls in Gegenwart eines geeigneten Säurebindemittels durchgeführt werden.

Als solche kommen alle üblichen anorganischen oder organischen Basen infrage. Hierzu gehören beispielsweise Alkalimetallhydroxide, wie Natriumhydroxid oder Kaliumhydroxid; Alkalimetallcarbonate, wie Natriumcarbonat, Kaliumcarbonat oder Natriumhydrogencarbonat; sowie tertiäre Amine, wie Triethylamin, N,N-Dimethylanilin, Pyridin, N,N-Dimethylaminopyridin, Diazabicyclooctan (DABCO), Diazabicyclononen (DBN) oder Diazabicycloundecen (DBU).

Ist die freiwerdende Säure Fluorwasserstoffsäure, d. h., wenn als Ausgangsverbindungen bei der Durchführung des erfindungsgemäßen Verfahrens (a - α) N-Halogenalkylsulfenyl-(thio)-carbamoylfluoride eingesetzt werden, also Hal in Formel (II) für Fluor steht, dann kann man als Säurebindemittel mit besonderem Vorteil auch Kaliumfluorid verwenden.

Die Reaktionstemperaturen können bei der Durchführung des erfindungsgemäßen Verfahrens (a - α) in einem größeren Bereich variiert werden. Im allgemeinen arbeitet man bei Temperaturen zwischen -20° C und +120° C, vorzugsweise bei Temperaturen zwischen 0° C und +80° C.

Zur Durchführung des erfindungsgemäßen Verfahrens (a - α) setzt man im allgemeinen pro Mol N-Halogenalkylsulfenyl-(thio)-carbamoylhalogenid der Formel (II) 1.0 bis 1.5 Mol, vorzugsweise äquimolare Mengen an Cyanocarbinol oder -thiol der Formel (III) und gegebenenfalls 1.0 bis 1.5 Mol, vorzugsweise äquimolare Mengen an Säurebindemittel sowie 1.0 bis 5.0 Mol, vorzugsweise 1.0 bis 2.5 Mol an Reaktionshilfsmittel ein. Die Reaktionsdurchführung, Aufarbeitung und Isolierung der Reaktionsprodukte der Formel (I) erfolgt nach allgemein üblichen Methoden.

Als Verdünnungsmittel zur Durchführung des erfindungsgemäßen Verfahrens (a - β) kommen ebenfalls organische Lösungsmittel oder organisch-wäßrige Zweiphasensysteme infrage. Vorzugsweise verwendet man die bei Verfahren (a - α) genannten Lösungsmittel oder die Zweiphasen-Systeme Wasser/Dichlormethan, Wasser/Benzol oder Wasser/Toluol.

Das erfindungsgemäße Verfahren (a - β) wird in Gegenwart eines Alkalimetallcyanids durchgeführt, vorzugsweise verwendet man Natriumcyanid oder Kaliumcyanid.

Das erfindungsgemäße Verfahren (a - β) kann bei Verwendung eines organisch-wässrigen Zweiphasensystems als Verdünnungsmittel in Gegenwart eines geeigneten Phasentransferkatalysators durchgeführt werden.

Als Beispiele für solche Katalysatoren seien genannt:

Tetrabutylammoniumjodid, Tetrabutylammoniumbromid, Tributyl-methylphosphoniumbromid, Trimethyl-$C_{13}/C_{15}$-alkylammoniumchlorid, Dibenzyl-dimethyl-ammonium-methylsulfat, Dimethyl-$C_{12}/C_{14}$-alkyl-benzylammoniumchlorid, Tetrabutylammoniumhydroxid, 18-Krone-6, Triethylbenzylammoniumchlorid, Trimethylbenzylammoniumchlorid.

Die Reaktionstemperaturen können bei der Durchführung des erfindungsgemäßen Verfahrens (a - β) in einem größeren Bereich variiert werden. Im allgemeinen arbeitet man bei Temperaturen zwischen -20° C und +120° C, vorzugsweise bei Temperaturen zwischen 0° C und +100° C.

Zur Durchführung des erfindungsgemäßen Verfahrens (a - β) setzt man pro Mol N-Halogenalkylsulfenyl- (thio)-carbamoylhalogenid der Formel (II) im allgemeinen 1,0 bis 1,5 Mol, vorzugsweise äquimolare Mengen an Aldehyd oder Keton der Formel (IV) und 1,0 bis 5,0 Mol, vorzugsweise 1,0 bis 2,5 Mol an Alkalimetallcyanid sowie gegebenenfalls 0,01 bis 1,0 Mol an Phasentransferkatalysator ein. Die Reaktionsdurchführung, Aufarbeitung und Isolierung der Reaktionsprodukte der Formel (I) erfolgt nach allgemein üblichen Methoden.

Als Verdünnungsmittel zur Durchführung des erfindungsgemäßen Verfahrens (b) kommen ebenfalls inerte organische Lösungsmittel infrage. Vorzugsweise verwendet man die bei Verfahren (a - α) aufgezählten Lösungsmittel.

Das erfindungsgemäße Verfahren (b) kann in Gegenwart eines geeigneten Säurebindemittels durchgeführt werden.

Als solche kommen alle üblichen anorganischen oder organischen Basen infrage. Hierzu gehören beispielsweise Alkalimetallhydroxide oder -alkoholate, wie Natriumhydroxid, Natriummethylat oder -ethylat oder Kaliumhydroxid; Alkalimetallcarbonate, wie Natriumcarbonat, Kaliumcarbonat oder Natriumhydrogencarbonat, sowie tertiäre Amine, wie Triethylamin, N,N-Dimethylanilin, Pyridin, N,N-Dimethylaminopyridin, Diazabicyclooctan (DABCO), Diazabicyclononen (DBN) oder Diazabicycloundecen (DBU).

Die Reaktionstemperaturen können bei der Durchführung des erfindungsgemäßen Verfahrens (b) in einem größeren Bereich

variiert werden. Im allgemeinen arbeitet man bei Temperaturen zwischen -20° C und +100° C, vorzugsweise bei Temperaturen zwischen 0° C und + 80° C.

Zur Durchführung des erfindungsgemäßen Verfahrens (b) setzt man pro Mol an Cyanalkyl-(thio)-carbamat der Formel (V) in allgemeinen 1.0 bis 1.5 Mol, vorzugsweise äquimolare Mengen an Sulfenylhalogenid der Formel (VI) und 1.0 bis 1.5 Mol, vorzugsweise äquimolare Mengen an Säurebindemittel ein. Die Reaktionsdurchführung, Aufarbeitung und Isolierung der Reaktionsprodukte der Formel (I) erfolgt nach allgemein üblichen Methoden.

Die erfindungsgemäßen Wirkstoffe weisen eine starke mikrobizide Wirkung auf und können zur Bekämpfung von unerwünschten Mikroorganismen praktisch eingesetzt werden. Die Wirkstoffe sind für den Gebrauch als Schädlingsbekämpfungsmittel geeignet.

So werden fungizide Mittel im Pflanzenschutz eingesetzt zur Bekämpfung von Plasmodiophoromycetes, Oomycetes, Chytridiomycetes, Zygomycetes, Ascomycetes, Basidiomycetes, Deuteromycetes.

Bakterizide Mittel werden im Pflanzenschutz zur Bekämpfung von Pseudomonadaceae, Rhizobiaceae, Enterobacteriaceae, Corynebacteriaceae und Streptomycetaceae eingesetzt.

Beispielhaft aber nicht begrenzend seien einige Erreger von pilzlichen und bakteriellen Erkrankungen, die unter die oben aufgezählten Oberbegriffe fallen, genannt:

Xanthomonas-Arten, wie beispielsweise Xanthomonas campestris pv. oryzae;
Pseudomonas-Arten, wie beispielsweise Pseudomonas oyringae pv. lachrymans;
Erwinia-Arten, wie beispielsweise Erwinia amylovora;
Pythium-Arten, wie beispielsweise Pythium ultimum;
Phytophthora-Arten, wie beispielsweise Phytophthora infestans;
Pseudoperonospora-Arten, wie beispielsweise Pseudoperonospora humuli oder Pseudoperonospora cubense;
Plasmopara-Arten, wie beispielsweise Plasmopara viticola;
Peronospora-Arten, wie beispielsweise Peronospora pisi oder P. brassicae;
Erysiphe-Arten, wie beispielsweise Erysiphe graminis;
Sphaerotheca-Arten, wie beispielsweise Sphaerotheca fuliginea;
Podosphaera-Arten, wie beispielsweise Podosphaera leucotricha;
Venturia-Arten, wie beispielsweise Venturia inaequalis;
Pyrenophora-Arten, wie beispielsweise Pyrenophora teres oder P. graminea
(Konidienform: Drechslera, Syn: Helminthosporium);
Cochliobolus-Arten, wie beispielsweise Cochliobolus sativus
(Konidienform: Drechslera, Syn: Helminthosporium);
Uromyces-Arten, wie beispielsweise Uromyces appendiculatus;
Puccinia-Arten, wie beispielsweise Puccinia recondita;
Tilletia-Arten, wie beispielsweise Tilletia caries;
Ustilago-Arten, wie beispielsweise Ustilago nuda oder Ustilago avenae;

0201032

Pellicularia-Arten, wie beispielsweise Pellicularia sasakii;
Pyricularia-Arten, wie beispielsweise Pyricularia oryzae;
Fusarium-Arten, wie beispielsweise Fusarium culmorum;
Botrytis-Arten, wie beispielsweise Botrytis cinerea;
Septoria-Arten, wie beispielsweise Septoria nodorum;
Leptosphaeria-Arten, wie beispielsweise Leptosphaeria nodorum;
Cercospora-Arten, wie beispielsweise Cercospora canescens;
Alternaria-Arten, wie beispielsweise Alternaria brassicae;
Pseudocercosporella-Arten, wie beispielsweise Pseudocercosporella herpotrichoides.

Die gute Pflanzenverträglichkeit der Wirkstoffe in den zur Bekämpfung von Pflanzenkrankheiten notwendigen Konzentrationen erlaubt eine Behandlung von oberirdischen Pflanzenteilen, von Pflanz- und Saatgut, und des Bodens.

Dabei lassen sich die erfindungsgemäßen Wirkstoffe mit besonders gutem Erfolg zur Bekämpfung von Getreidekrankheiten, wie beispielsweise gegen den Erreger der Streifenkrankheit der Gerste (Drechslera graminea), sowie gegen den Erreger des Braunrostes am Weizen (Puccinia recondita) oder zur Bekämpfung von Reiskrankheiten wie beispielsweise gegen den Erreger der Reisfleckenkrankheit (Pyricularia oryzae) einsetzen. Daneben zeigen die erfindungsgemäßen Wirkstoffe auch sehr gute Wirksamkeit gegen Oomyceten und Pflanzenbakterien.

Darüberhinaus eignen sich die Wirkstoffe bei guter Pflanzenverträglichkeit und günstiger Warmblütertoxizität zur Bekämpfung von tierischen Schädlingen, insbesondere Insekten und Spinnentieren, die in der Landwirtschaft, in Forsten, im Vorrats- und Materialschutz sowie auf dem Hygienesektor vorkommen. Sie sind gegen normal sensible und resistente Arten sowie gegen alle oder einzelne Entwicklungsstadien wirksam. Zu den oben erwähnten Schädlingen gehören:

Aus der Ordnung der Isopoda z. B. Oniscus asellus, Armadillidium vulgare, Porcellio scaber.
Aus der Ordnung der Diplopoda z. B. Blaniulus guttulatus.
Aus der Ordnung der Chilopoda z. B. Geophilus carpophagus, Scutigera spec.
Aus der Ordnung der Symphyla z. B. Scutigerella immaculata.
Aus der Ordnung der Thysanura z. B. Lepisma saccharina.
Aus der Ordnung der Collembola z. B. Onychiurus armatus.
Aus der Ordnung der Orthoptera z. B. Blatta orientalis, Periplaneta americana, Leucophaea maderae, Blattella germanica, Acheta domesticus, Gryllotalpa spp., Locusta migratoria migratorioides, Melanoplus differentialis, Schistocerca gregaria.
Aus der Ordnung der Dermaptera z. B. Forficula auricularia.
Aus der Ordnung der Isoptera z. B. Reticulitermes spp..
Aus der Ordnung der Anoplura z. B. Phylloxera vastatrix, Pemphigus spp., Pediculus humanus corporis, Haematopinus spp., Linognathus spp..

Aus der Ordnung der Mallophaga z. B. Trichodectes spp., Damalinea spp..
Aus der Ordnung der Thysanoptera z. B. Hercinothrips femoralis, Thrips tabaci.
Aus der Ordnung der Heteroptera z. B. Eurygaster spp., Dysdercus intermedius, Piesma quadrata, Cimex lectularius, Rhodnius prolixus, Triatoma spp..
Aus der Ordnung dr Homoptera z. B. Aleurodes brassicae, Bemisia tabaci, Trialeurodes vaporariorum, Aphis gossypii, Brevicoryne brassicae, Cryptomyzus ribis, Doralis fabae, Doralis pomi, Eriosoma lanigerum, Hyalopterus arundinis, Macrosiphum avenae, Myzus spp., Phorodon humuli, Rhopalosiphum padi, Empoasca spp., Euscelis bilobatus, Nephotettix cincticeps, Lecanium corni, Saissetia oleae, Laodelphax striatellus, Nilaparvata lugens, Aonidiella aurantii, Aspidiotus hederae, Pseudococcus spp. Psylla spp..
Aus der Ordnung der Lepidoptera z. B. Pectinophora gossypiella, Bupalus piniarius, Cheimatobia brumata, Lithocolletis blancardella, Hyponomeuta padella, Plutella maculipennis, Malacosoma neustria, Euproctis chrysorrhoea, Lymantria spp. Bucculatrix thurberiella, Phyllocnistis citrella, Agrotis spp., Euxoa spp., Feltia spp., Earias insulana, Heliothis spp., Laphygma exigua, Mamestra brassicae, Panolis flammea, Prodenia litura, Spodoptera spp., Chilo spp., Pyrausta nubilalis, Ephestia kuehniella, Galleria mellonella, Tineola bisselliella, Tinea pellionella, Hofmannophila pseudospretella, Cacoecia podana, Capua reticulana, Choristoneura fumiferana, Clysia ambiguella Homona magnanima, Tortrix viridana.

Aus der Ordnung der Coleoptera z. B. Anobium punctatum, Rhizopertha dominica, Bruchidius obtectus, Acanthoscelides obtectus, Hylotrupes bajulus, Agelastica alni, Leptinotarsa decemlineata, Phaedon cochleariae, Diabrotica spp., Psylliodes chrysocephala, Epilachna varivestis, Atomaria spp., Oryzaephilus surinamensis, Anthonomus spp., Sitophilus spp., Otiorrhynchus sulcatus, Cosmopolites sordidus, Ceuthorrhynchus assimilis, Hypera postica, Dermestes spp., Trogoderma spp., Anthrenus spp., Attagenus spp., Lyctus spp., Meligethes aeneus, Ptinus spp., Niptus hololeucus, Gibbium psylloides, Tribolium spp., Tenebrio molitor, Agriotes spp., Conoderus spp., Melolontha melolontha, Amphimallon solstitialis, Costelytra zealandica.

Aus der Ordnung der Hymenoptera z. B. Diprion spp., Hoplocampa spp., Lasius spp., Monomorium pharaonis, Vespa spp..

Aus der Ordnung der Diptera z. B. Aedes spp., Anopheles spp., Culex spp., Drosophila melanogaster, Musca spp., Fannia spp., Calliphora erythrocephala, Lucilia spp., Chrysomyia spp., Cuterebra spp., Gastrophilus spp., Hyppobosca spp., Stomoxys spp., Oestrus spp., Hypoderma spp., Tabanus spp., Tannia spp., Bibio hortulanus, Oscinella frit, Phorbia spp., Pegomyia hyoscyami, Ceratitis capitata, Dacus oleae, Tipula paludosa.

Aus der Ordnung der Siphonaptera z. B. Xenopsylla cheopis, Ceratophyllus spp..

Aus der Ordnung der Arachnida z. B. Scorpio maurus, Latrodectus mactans und

aus der Ordnung der Acarina z. B. Acarus siro, Argas spp., Ornithodoros spp., Dermanyssus gallinae, Eriophyes ribis,

Phyllocoptruta oleivora, Boophilus spp., Rhipicephalus spp., Amblyomma spp., Hyalomma spp., Ixodes spp., Psoroptes spp., Chorioptes spp., Sarcoptes spp., Tarsonemus spp., Bryobia praetiosa, Panonychus spp., Tetranychus spp..

Dabei lassen sich die erfindungsgemäßen Wirkstoffe mit besonders gutem Erfolg zur Bekämpfung von Bodeninsekten wie beispielsweise gegen Phorbia-Maden, zur Bekämpfung von Blattinsekten und pflanzenschädigenden Milben einsetzen.

Die Wirkstoffe können in die üblichen Formulierungen übergeführt werden, wie Lösungen, Emulsionen, Spritzpulver, Suspensionen, Pulver, Stäubemittel, Schäume, Pasten, lösliche Pulver, Granulate, Aerosole, Suspensions-Emulsionskonzentrate, Saatgutpuder, Wirkstoff-imprägnierte Natur- und synthetische Stoffe, Feinstverkapselungen in polymeren Stoffen und in Hüllmassen für Saatgut, ferner in Formulierungen mit Brennsätzen, wie Räucherpatronen, -dosen, -spiralen u. ä. sowie ULV-Kalt- und Warmnebel-Formulierungen.

Diese Formulierungen werden in bekannter Weise hergestellt, z. B. durch Vermischen der Wirkstoffe mit Streckmitteln, also flüssigen Lösungsmitteln, unter Druck stehenden verflüssigten Gasen und/oder festen Trägerstoffen, gegebenenfalls unter Verwendung von oberflächenaktiven Mitteln, also Emulgiermitteln und/oder Dispergiermitteln und/oder schaumerzeugenden Mitteln. Im Falle der Benutzung von Wasser als Streckmittel können z. B. auch organische Lösungsmittel als Hilfslösungsmittel verwendet werden. Als flüssige Lösungsmittel kommen im wesentlichen infrage:

Aromaten, wie Xylol, Toluol, oder Alkyl-naphthaline, chlorierte Aromaten oder chlorierte aliphatische Kohlenwasserstoffe, wie Chlorbenzole, Chlorethylene oder Methylenchlorid, aliphatische Kohlenwasserstoffe, wie Cyclohexan oder Paraffine, z. B. Erdölfraktionen, Alkohole, wie Butanol oder Glycol sowie deren Ether und Ester, Ketone, wie Aceton, Methylethylketon, Methylisobutylketon oder Cyclohexanon, starke polare Lösungsmittel, wie Dimethylformamid und Dimethylsulfoxid, sowie Wasser; mit verflüssigten gasförmigen Streckmitteln oder Trägerstoffen sind solche Flüssigkeiten gemeint, welche bei normaler Temperatur und unter Normaldruck gasförmig sind, z. B. Aerosol-Treibgase, wie Halogenkohlenwasserstoffe sowie Butan, Propan, Stickstoff und Kohlendioxid; als feste Trägerstoffe kommen infrage: z. B. natürliche Gesteinsmehle, wie Kaoline, Tonerden, Talkum, Kreide, Quarz, Attapulgit, Montmorillonit oder Diatomeenerde und synthetische Gesteinsmehle, wie hochdisperse Kieselsäure, Aluminiumoxid und Silikate; als feste Trägerstoffe für Granulate kommen infrage: z. B. gebrochene und fraktionierte natürliche Gesteine wie Calcit, Marmor, Bims, Sepiolith, Dolomit sowie synthetische Granulate aus anorganischen und organischen Mehlen sowie Granulate aus organischem Material, wie Sägemehl, Kokosnußschalen, Maiskolben und Tabakstengeln; als Emulgier- und /oder schaumerzeugende Mittel kommen infrage: z. B. nichtionogene und anionische Emulgatoren, wie Polyoxyethylen-Fettsäureester, Polyoxyethylen-Fettalkohol-ether, z. B. Alkylarylpolyglykol-ether, Alkylsulfonate, Alkylsulfate, Arylsulfonate sowie Eiweißhydrolysate; als Dispergiermittel kommen infrage: z. B. Lignin-Sulfitablaugen und Methylcellulose.

Es können in den Formulierungen Haftmittel wie Carboxymethylcellulose, natürliche und synthetische pulverige, körnige oder latexförmige Polymere verwendet werden, wie Gummiarabicum, Polyvinylalkohol, Polyvinylacetat, sowie natürliche Phospholipide, wie Kephaline und Lecithine, und synthetische Phospholipide. Weitere Additive können mineralische und vegetabile Oele sein.

Es können Farbstoffe wie anorganische Pigmente, z. B. Eisenoxid, Titanoxid, Ferrocyanblau und organische Farbstoffe, wie Alizarin-, Azo- und Metallphthalocyaninfarbstoffe und Spurennährstoffe wie Salze von Eisen, Mangan, Bor, Kupfer, Kobalt, Molybdän und Zink verwendet werden.

Die Formulierungen enthalten im allgemeinen zwischen 0,1 und 95 Gewichtsprozent Wirkstoff, vorzugsweise zwischen 0,5 und 90 %.

Die erfindungsgemäßen Wirkstoffe können in den Formulierungen oder in den verschiedenen Anwendungsformen in Mischung mit anderen bekannten Wirkstoffen vorliegen, wie Fungiziden, Bakteriziden, Insektiziden, Akariziden, Nematiziden, Herbiziden, Schutzstoffen gegen Vogelfraß, Wuchsstoffen, Pflanzennährstoffen und Bodenstrukturverbesserungsmitteln.

Die Wirkstoffe können als solche, in Form ihrer Formulierungen oder der daraus durch weiteres Verdünnen bereiteten Anwendungsformen, wie gebrauchsfertige Lösungen, Emulsionen, Suspensionen, Pulver, Pasten und Granulate angewendet

werden. Die Anwendung geschieht in üblicher Weise, z. B. durch Gießen, Tauchen, Spritzen, Sprühen, Vernebeln, Verdampfen, Injizieren, Verschlämmen, Verstreichen, Stäuben, Streuen, Trockenbeizen, Feuchtbeizen, Naßbeizen, Schlämmbeizen oder Inkrustieren.

Bei der Behandlung von Pflanzenteilen können die Wirkstoffkonzentrationen in den Anwendungsformen in einem größeren Bereich variiert werden. Sie liegen im allgemeinen zwischen 1 und 0,0001 Gew.-%, vorzugsweise zwischen 0,5 und 0,001 %.

Bei der Saatgutbehandlung werden im allgemeinen Wirkstoffmengen von 0,001 bis 50 g je Kilogramm Saatgut, vorzugsweise 0,01 bis 10 g, benötigt.

Bei Behandlung des Bodens sind Wirkstoffkonzentrationen von 0,00001 bis 0,1 Gew.-%, vorzugsweise von 0,0001 bis 0,02 Gew.-%, am Wirkungsort erforderlich.

## Herstellungsbeispiele

### Beispiel 1:

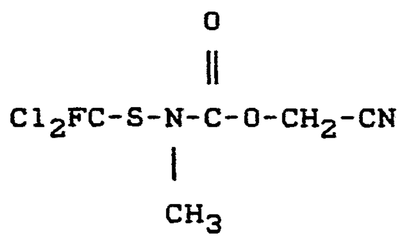

(Verfahren a - α)

Zu einer Lösung von 2,9 g (0,05 Mol) Glykolsäurenitril in 100 ml Acetonitril gibt man erst 10,5 g (0,05 Mol) N-Methyl-N-dichlorfluormethylsulfenyl-carbamidsäurefluorid und dann 6 g (0,1 Mol) Kaliumfluorid. Das Reaktionsgemisch wird 5 Stunden gerührt, mit 200 ml Toluol versetzt und zweimal mit je 50 ml Wasser gewaschen. Man trocknet die organische Phase über Natriumsulfat, destilliert das Lösungsmittel im Vakuum ab und destilliert den Rückstand im Hochvakuum. Man erhält so 11 g (89 % der Theorie) N-Methyl-N-dichlorfluormethylsulfenyl-carbamidsäure-cyanmethylester in Form eines gelben Öles mit dem Brechungsindex $n_D^{20}$ : 1,4888 und dem Siedepunkt 100° C / 0,5 mbar.

### Beispiel 2:

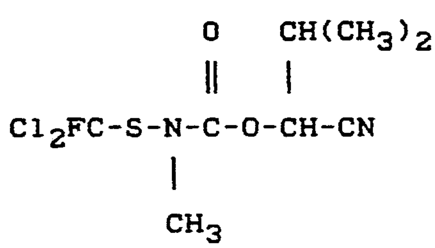

(Verfahren a - β)

Zu einer Mischung aus 4,4 g (0,06 Mol) Isobutyraldehyd, 70 ml Toluol und 0,5 g Triethylbenzylammoniumchlorid gibt man erst eine Lösung von 5,9 g (0,09 Mol) Kaliumcyanid in 15 ml Wasser und dann eine Lösung von 12,6 g (0,06 Mol) N-Methyl-N-dichlorfluormethylsulfenyl-carbamidsäurefluorid in 10 ml Toluol. Das Reaktionsgemisch wird 18 Stunden gerührt und nach Zugabe von 100 ml Toluol zweimal mit je 200 ml Wasser gewaschen. Man trocknet die organische Phase über Natriumsulfat, destilliert das Lösungsmittel im Vakuum ab und entfernt flüchtige Nebenprodukte im Hochvakuum bei 50°C Badtemperatur. Auf diese Weise erhält man 11 g (67 % der Theorie) N-Methyl-N-dichlorfluormethylsulfenylcarbamidsäure-O-(1-cyan-2-methyl)-propylester in Form eines hellbraunen Öles mit dem Brechungsindex $n_D^{20}$: 1,4830.

In entsprechender Weise und gemäß den allgemeinen Angaben zur Herstellung erhält man die folgenden N-Halogenalkylsulfenyl-(thio)-carbamate der allgemeinen Formel (I):

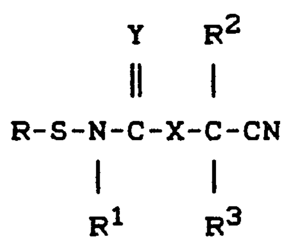

(I)

| Bsp.-Nr. | R | $R^1$ | $R^2$ | $R^3$ | X | Y | Brechungsindex |
|---|---|---|---|---|---|---|---|
| 3 | $FCl_2C-$ | $CH_3-(CH_2)_3-$ | H | H | O | O | $n_D^{20}$:1.4650 |

| Bsp.-Nr. | R | $R^1$ | $R^2$ | $R^3$ | X | Y | Brechungs-index |
|---|---|---|---|---|---|---|---|
| 4 | $FCl_2C-$ | 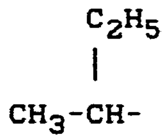 | H | H | O | O | $n_D^{20}$:1.4781 |
| 5 | $FCl_2C-$ | $CH_3$ | $CH_3$ | H | O | O | $n_D^{23}$:1.4768 |
| 6 | $FCl_2C-$ | $CH_3-(CH_2)_3-$ | $CH_3$ | H | O | O | $n_D^{20}$:1.4661 |
| 7 | $FCl_2C-$ | 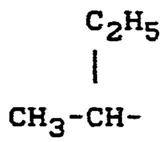 | $CH_3$ | H | O | O | $n_D^{20}$:1.4632 |
| 8 | $FCl_2C-$ | $CH_3$ | 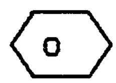 | H | O | O | $n_D^{20}$:1.5602 |
| 9 | $FCl_2C-$ | $CH_3-(CH_2)_3$ | 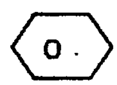 | H | O | O | $n_D^{20}$:1.5441 |
| 10 | $FCl_2C-$ | $CH_3$ | $CH_3$ | $CH_3$ | O | O | |
| 11 | $FCl_2C-$ | $CH_3$ | H | H | O | O | |
| 12 | $FCl_2C-$ | $CH_3$ | H | H | S | S | |
| 13 | $FCl_2C-$ | $CH_3-(CH_2)_2-$ | H | H | O | O | $n_D^{22}$:1.4700 |
| 14 | $FCl_2C-$ | $(CH_3)_2CH-$ | H | H | O | O | |

| Bsp.-Nr. | R | $R^1$ | $R^2$ | $R^3$ | X | Y | Brechungsindex/Schmelzpunkt |
|---|---|---|---|---|---|---|---|
| 15 | $FCl_2C-$ | $C_2H_5$ | H | H | O | O | $n_D^{22}$:1.4920 |
| 16 | $FCl_2C-$ | $CH_3-(CH_2)_3-$ | $CH_3$ | $CH_3$ | O | O | |
| 17 | $FCl_2C-$ | $CH_3$ | $C_2H_5$ | H | O | O | |
| 18 | $FCl_2C-$ | $CH_3$ | $CH_3-(CH_2)_2-$ | H | O | O | |
| 19 | $FCl_2C-$ | $CH_3$ | $CH_3-(CH_2)_3-$ | H | O | O | |
| 20 | $FCl_2C-$ | $CH_3$ | H | H | S | O | |
| 21 | $FCl_2C-$ | $CH_3$ | H | H | O | S | |
| 22 | $FCl_2C-$ | $CH_3-(CH_2)_2-$ | $CH_3$ | H | O | O | $n_D^{22}$:1.4623 |
| 23 | $FCl_2C-$ | $C_2H_5$ | $CH_3$ | H | O | O | $n_D^{22}$:1.4753 |
| 24 | $FCl_2C-$ | $CH_3$ | $C(CH_3)_3-$ | H | O | O | Fp: 51°C |

Anwendungsbeispiele:

In den folgenden Anwendungsbeispielen werden die nachstehend aufgeführten Verbindungen als Vergleichssubstanzen eingesetzt:

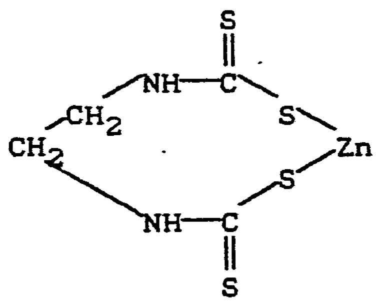

(A)

Zink-ethylen-1,2-bis-(dithiocarbamat)

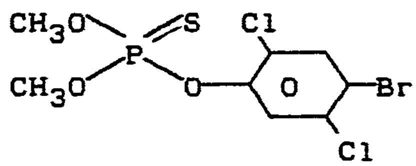

(B)

O,O-Dimethyl-O-(4-brom-2,5-dichlorphenyl)-thionophosphorsäureester

0201032

Beispiel A

Drechslera graminea-Test (Gerste) / Saatgutbehandlung (syn. Helminthosporium gramineum)

Die Anwendung der Wirkstoffe erfolgt als Trockenbeizmittel. Sie werden zubereitet durch Abstrecken des jeweiligen Wirkstoffes mit Gesteinsmehl zu einer feinpulvrigen Mischung, die eine gleichmäßige Verteilung auf der Saatgutoberfläche gewährleistet.

Zur Beizung schüttelt man das infizierte Saatgut 3 Minuten lang mit dem Beizmittel in einer verschlossenen Glasflasche.

Das Saatgut setzt man in gesiebter, feuchter Standarderde eingebettet, in verschlossenen Petrischalen im Kühlschrank 10 Tage lang einer Temperatur von $4^0C$ aus. Dabei wird die Keimung der Gerste und gegebenenfalls auch der Pilzsporen eingeleitet. Anschließend sät man die vorgekeimte Gerste mit 2 x 50 Korn 3 cm tief in eine Standarderde und kultiviert sie im Gewächshaus bei einer Temperatur von ca. $18^0C$ in Saatkästen, die täglich 15 Stunden dem Licht ausgesetzt werden.

Ca. 3 Wochen nach der Aussaat erfolgt die Auswertung der Pflanzen auf Symptome der Streifenkrankheit.

Eine deutliche Überlegenheit in der Wirksamkeit gegenüber dem Stand der Technik zeigen bei diesem Test z. B. die Verbindungen gemäß den Herstellungsbeispielen: 1, 2, 3, 4, 5, 6, 7 und 8.

Beispiel B

Puccinia-Test (Weizen) / protektiv

Lösungsmittel: 100 Gewichtsteile Dimethylformamid
Emulgator: 0,25 Gewichtsteile Alkylarylpolyglykolether

Zur Herstellung einer zweckmäßigen Wirkstoffzubereitung vermischt man 1 Gewichtsteil Wirkstoff mit den angegebenen Mengen Lösungsmittel und Emulgator und verdünnt das Konzentrat mit Wasser auf die gewünschte Konzentration.

Zur Prüfung auf protektive Wirksamkeit werden junge Pflanzen mit einer Sporensuspension von Puccinia recondita in einer 0,1 %igen wäßrigen Agarlösung inokuliert. Nach Antrocknen besprüht man die Pflanzen mit der Wirkstoffzubereitung taufeucht. Die Pflanzen verbleiben 24 Stunden bei 20°C und 100 % rel. Luftfeuchtigkeit in einer Inkubationskabine.

Die Pflanzen werden in einem Gewächshaus bei einer Temperatur von ca. 20°C und einer relativen Luftfeuchtigkeit von ca. 80 % aufgestellt, um die Entwicklung von Rostpusteln zu begünstigen.

10 Tage nach der Inokulation erfolgt die Auswertung.

Eine deutliche Überlegenheit in der Wirksamkeit gegenüber dem Stand der Technik zeigt bei diesem Test z. B. die Verbindung gemäß dem Herstellungsbeispiel: 1.

Beispiel C

Grenzkonzentrations-Test / Bodeninsekten

Testinsekt: Phorbia antiqua-Maden im Boden
Lösungsmittel: 3 Gewichtsteile Aceton
Emulgator: 1 Gewichtsteil Alkylarylpolyglykoläther

Zur Herstellung einer zweckmäßigen Wirkstoffzubereitung vermischt man 1 Gewichtsteil Wirkstoff mit der angegebenen Menge Lösungsmittel, gibt die angegebene Menge Emulgator zu und verdünnt das Konzentrat mit Wasser auf die gewünschte Konzentration.

Die Wirkstoffzubereitung wird innig mit dem Boden vermischt. Dabei spielt die Konzentration des Wirkstoffs in der Zubereitung praktisch keine Rolle, entscheidend ist allein die Wirkstoffgewichtsmenge pro Volumeneinheit Boden, welche in ppm (=mg/l) angegeben wird. Man füllt den Boden in Töpfe und läßt diese bei Raumtemperatur stehen.

Nach 24 Stunden werden die Testtiere in den behandelten Boden gegeben und nach weiteren 2 bis 7 Tagen wird der Wirkungsgrad des Wirkstoffs durch Auszählen der toten und lebenden Testinsekten in % bestimmt. Der Wirkungsgrad ist 100 %, wenn alle Testinsekten abgetötet worden sind, er ist 0 %, wenn noch genau so viele Testinsekten leben wie bei der unbehandelten Kontrolle.

Eine deutliche Überlegenheit in der Wirksamkeit gegenüber dem Stand der Technik zeigt bei diesem Test z. B. die Verbindung gemäß Herstellungsbeispiel 6.

Patentansprüche

1. N-Halogenalkylsulfenyl-(thio)-carbamate der allgemeinen Formel (I),

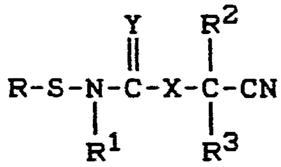

(I)

in welcher

R für Halogenalkyl steht,

$R^1$ für Alkyl oder für gegebenenfalls substituiertes Aryl steht,

$R^2$ für Wasserstoff, Alkyl oder für gegebenenfalls substituiertes Aryl steht,

$R^3$ für Wasserstoff oder Alkyl steht und

X und Y unabhängig voneinander für Sauerstoff oder Schwefel stehen.

2. N-Halogenalkylsulfenyl-(thio)-carbamate gemäß Anspruch 1, wobei in der Formel (I)

R für geradkettiges oder verzweigtes Halogenalkyl mit 1 bis 4 Kohlenstoffatomen und 1 bis 9 gleichen oder verschiedenen Halogenatomen steht,

$R^1$ für geradkettiges oder verzweigtes Alkyl mit 1 bis 8 Kohlenstoffatomen oder für gegebenenfalls einfach bis siebenfach, gleich oder verschieden, jeweils durch Halogen, Cyano, Nitro, geradkettiges oder verzweigtes Alkyl oder Alkoxy mit jeweils 1 bis 4 Kohlenstoffatomen oder Halogenalkyl mit 1 bis 4 Kohlenstoffatomen und 1 bis 9 gleichen oder verschiedenen Halogenatomen substituiertes Phenyl oder Naphthyl steht,

$R^2$ für Wasserstoff, für geradkettiges oder verzweigtes Alkyl mit 1 bis 8 Kohlenstoffatomen oder für gegebenenfalls ein- bis siebenfach, gleich oder verschieden, jeweils durch Halogen, Cyano, Nitro, geradkettiges oder verzweigtes Alkyl oder Alkoxy mit jeweils 1 bis 4 Kohlenstoffatomen oder Halogenalkyl mit 1 bis 4 Kohlenstoffatomen und 1 bis 9 gleichen oder verschiedenen Halogenatomen substituiertes Phenyl oder Naphthyl steht,

$R^3$ für Wasserstoff oder für geradkettiges oder verzweigtes Alkyl mit 1 bis 8 Kohlenstoffatomen steht und

X und Y unabhängig voneinander jeweils für Sauerstoff oder Schwefel stehen.

3. N-Halogenalkylsulfenyl-(thio)-carbamate gemäß Anspruch 1, wobei in der Formel (I)

R für Trifluormethyl, Difluorchlormethyl, Fluordichlormethyl, Trichlormethyl, Dichlormethyl, Chlormethyl, Chlorethyl, Bromethyl, Trichlorethyl, Trifluorethyl oder Pentafluorethyl steht,

$R^1$ für Methyl, Ethyl, n- oder i-Propyl, n-, i-, s- oder t-Butyl oder für gegebenenfalls ein- bis dreifach, gleich oder verschieden durch Chlor, Methyl, Methoxy oder Trifluormethyl substituiertes Phenyl steht,

$R^2$ für Wasserstoff, Methyl, Ethyl, n- oder i-Propyl, n-, i-, s- oder t-Butyl oder für gegebenenfalls ein- bis dreifach, gleich oder verschieden durch Chlor, Methyl, Methoxy oder Trifluormethyl substituiertes Phenyl steht,

$R^3$ für Wasserstoff, Methyl, Ethyl, n- oder i-Propyl sowie n-, i-, s- oder t-Butyl steht und

X und Y unabhängig voneinander jeweils für Sauerstoff oder Schwefel steht.

4. N-Halogenalkylsulfenyl-(thio)-carbamate gemäß Anspruch 1, wobei in der Formel (I)

R für Dichlorfluormethyl steht,

$R^1$ für Methyl, Ethyl, n-Propyl, i-Propyl, n-Butyl, i-Butyl, s- oder t.-Butyl steht,

$R^2$ für Wasserstoff, Phenyl, Methyl, Ethyl, n-Propyl, i-Propyl, n-, i-, s- oder t.-Butyl steht,

$R^3$ für Wasserstoff oder Methyl steht und

X und Y unabhängig voneinander für Sauerstoff oder Schwefel stehen.

5. Verfahren zur Herstellung von N-Halogenalkylsulfenyl-(thio)-carbamaten der allgemeinen Formel (I),

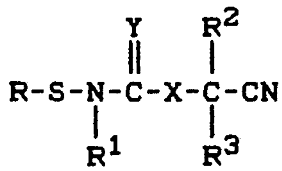

(I)

in welcher

R für Halogenalkyl steht,

$R^1$ für Alkyl oder für gegebenenfalls substituiertes Aryl steht,

$R^2$ für Wasserstoff, Alkyl oder für gegebenenfalls substituiertes Aryl steht,

$R^3$ für Wasserstoff oder Alkyl steht und

X und Y unabhängig voneinander jeweils für Sauerstoff oder Schwefel stehen,

dadurch gekennzeichnet, daß man

(a) N-Halogenalkylsulfenyl-(thio)-carbamoylhalogenide der Formel (II)

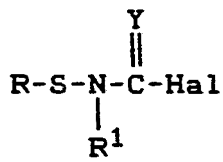

(II)

in welcher

R, $R^1$ und Y die oben angegebenen Bedeutungen haben und

Hal für Halogen steht,

entweder

(α) mit Cyanocarbinolen oder -thiolen der Formel (III),

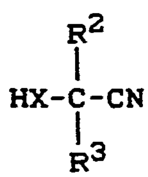

(III)

in welcher

$R^2$, $R^3$ und X die oben angegebenen Bedeutungen haben,

gegebenenfalls in Gegenwart eines Verdünnungsmittels und gegebenenfalls in Gegenwart eines Säurebindemittels umsetzt oder

(β) mit Ketonen oder Aldehyden der Formel (IV)

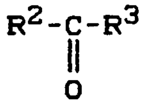

(IV)

in welcher

$R^2$ und $R^3$ die oben angegebenen Bedeutungen haben,

in Gegenwart eines Alkylimetallcyanids und gegebenenfalls in Gegenwart eines Verdünnungsmittels, sowie gegebenenfalls in Gegenwart eines Katalysators umsetzt, oder daß man

(b) Cyanalkyl-(thio)-carbamate der Formel (V)

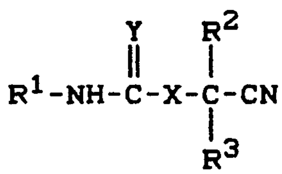

(V)

in welcher

$R^1$, $R^2$, $R^3$, X und Y die oben angegebenen Bedeutungen haben,

mit Sulfenylhalogeniden der Formel (VI)

R - S - Hal' (VI)

in welcher

R die oben angegebene Bedeutung hat und

Hal' für Halogen steht,

gegebenenfalls in Gegenwart eines Verdünnungsmittels und gegebenenfalls in Gegenwart eines Säurebindemittels umsetzt.

6. Schädlingsbekämpfungsmittel, gekennzeichnet durch einen Gehalt an mindestens einem N-Halogenalkylsulfenyl-(thio)-carbamat der Formel (I) gemäß den Ansprüchen 1 bis 5.

7. Verwendung von N-Halogenalkylsulfenyl-(thio)-carbamaten der Formel (I) gemäß den Ansprüchen 1 bis 5 zur Bekämpfung von Schädlingen.

8. Verfahren zur Bekämpfung von Schädlingen, dadurch gekennzeichnet, daß man N-Halogenalkylsulfenyl-(thio)-carbamate der Formel (I) gemäß den Ansprüchen 1 bis 5 auf Schädlinge und/oder ihren Lebensraum einwirken läßt.

9. Verfahren zur Herstellung von Schädlingsbekämpfungsmitteln, dadurch gekennzeichnet, daß man N-Halogenalkylsulfenyl-(thio)-carbamate der Formel (I) gemäß den Ansprüchen 1 bis 5 mit Streckmitteln und/oder oberflächenaktiven Mitteln vermischt.

10. Verwendung von N-Halogenalkylsulfenyl-(thio)-carbamaten der Formel (I) gemäß Anspruch 6 zur Bekämpfung von Pilzen und Insekten.